# FASCICULE DE BREVET EUROPEEN

(11) **EP 3 226 062 B1**
(45) Date de publication et mention de la délivrance du brevet: **14.08.2019**
(21) Numéro de dépôt: 17162703.7
(22) Date de dépôt: 24.03.2017
(51) Int. Cl.: G02B 27/01, B64D 45/08, G01S 17/89, G01S 7/24, G01S 13/89, G01S 13/91, G01S 13/94, G08G 5/00, G06K 9/00, G01C 23/00, G08G 5/02, G06T 15/20, G06T 19/00, H04N 5/33, H04N 7/18

(54) **PROCEDE DE REPRESENTATION SYNTHETIQUE D ELEMENTS D'INTERET DANS UN SYSTEME DE VISUALISATION POUR AERONEF**
VERFAHREN ZUR SYNTHETISCHEN DARSTELLUNG VON WICHTIGEN ELEMENTEN IN EINEM VISUALISIERUNGSSYSTEM EINES LUFTFAHRZEUGS
METHOD FOR SYNTHETIC REPRESENTATION OF ELEMENTS OF INTEREST IN A DISPLAY SYSTEM FOR AN AIRCRAFT

(30) Priorité: 01.04.2016 FR 1600547
(43) Date de publication de la demande: 04.10.2017
(73) Titulaire: THALES, 92400 Courbevoie (FR)
(72) Inventeur: GANILLE, Thierry, 33700 MERIGNAC (FR); AYMERIC, Bruno, 33160 ST MEDARD EN JALLES (FR); LUX, Johanna, 33700 MERIGNAC (FR)
(74) Mandataire: Bréda, Jean-Marc

(56) Documents cités:
- US-A1- 2014 285 661
- US-B1- 8 917 191
- US-B1- 9 070 285
- US-B1- 9 243 910

## Description

Le domaine de l'invention est celui des systèmes de visualisation combinant une image synthétique construite à partir d'une base de données avec une ou des images provenant d'un ou de plusieurs capteurs. Ces systèmes sont connus sous le terme de « CVS », acronyme de « Combined Vision Systems ». Ils sont dédiés à la conduite de véhicules et notamment d'aéronefs. Ils permettent aux opérateurs du véhicule de conduire leur mission par mauvais temps avec les mêmes règles et la même sureté que par beau temps. Par exemple, en utilisation aéronautique, ils sont notamment utilisés lors des phases de roulage, de décollage et d'atterrissage.

Les capteurs mis en oeuvre sont des capteurs infrarouges, des radars millimétriques ou des lidars. L'affichage des images peut se faire sur des dispositifs de visualisation situés sur la planche de bord ou encore sur des dispositifs de visualisation transparents affichant les images en superposition sur le paysage extérieur.

Pour permettre au pilote de bien se localiser, on cherche à détecter et à afficher des objets facilement reconnaissables et identifiables. On appelle, dans la suite de la description, ces objets « éléments d'intérêt ». On comprend que ces éléments d'intérêt doivent être affichés de la manière la plus claire et la plus intuitive possible.

Dans le cas d'applications aéronautiques, ces objets sont notamment des pistes d'atterrissage. Lors d'une approche aux instruments, la réglementation impose à l'équipage d'acquérir des références visuelles extérieures au-dessus d'une certaine altitude ou à une certaine hauteur de la piste pour pouvoir continuer l'atterrissage, sinon l'équipage effectue une remise des gaz. Depuis quelques années, une réglementation spécifique autorise l'équipage à acquérir les références visuelles non plus en vision directe mais par l'intermédiaire d'un capteur regardant vers l'avant de l'aéronef. Il est donc essentiel que la présentation des informations issues des capteurs soit présentée de la meilleure façon possible afin d'aider l'équipage dans sa prise de décision.

Une première solution consiste à afficher uniquement l'image synthétique dans un système dit « SVS », acronyme de « Synthetic Vision System » sans prendre en compte les informations issues des capteurs d'image. Ainsi, en utilisation aéronautique, le système affiche uniquement le terrain et les pistes d'atterrissage à partir de la position de l'aéronef fournie par son système « GPS » et sa centrale inertielle. L'incertitude sur la position de l'avion ainsi que la précision des positions des pistes stockées dans les bases de données interdisent, cependant, l'utilisation d'un SVS dans des phases critiques où l'aéronef est proche du sol comme l'atterrissage et le décollage.

Une seconde solution consiste à afficher uniquement l'image issue du ou des capteurs. On appelle ces systèmes « EVS », acronyme de « Enhanced Vision Systems » ou « EFVS », acronyme de « Enhanced Flight Vision Systems ». Cependant, les éléments d'intérêt ne sont pas nécessairement facilement identifiables. Ainsi, un détecteur infrarouge permet difficilement de détecter une piste d'atterrissage dans certaines conditions météorologiques, comme par temps de brouillard, par exemple. L'équipage ne dispose alors pas des informations nécessaires à l'atterrissage.

Enfin, les solutions CVS existantes sont basées sur l'affichage simultané de tout ou partie de l'image synthétique et de l'image issue du capteur, par exemple par la superposition des différentes images et éventuellement le recalage de l'image synthétique sur un élément remarquable de l'image du capteur, ou encore par l'incrustation de l'image du capteur dans un médaillon de l'image synthétique ou encore par le détourage d'éléments remarquables de l'image capteur et l'incrustation de ces éléments sur l'image synthétique. A titre d'exemples, le brevet US 7 826 666 intitulé « Methods and apparatus for runway segmentation using sensor analysis » et le brevet US 7 925 117 intitulé « Fusion of sensor data and synthetic data to form an integrated image » décrivent des solutions de ce type.

Les principaux défauts de ces solutions CVS résident dans leur difficulté de lisibilité et d'interprétation par l'équipage. Un autre défaut est leur dépendance à la fréquence de génération des images des capteurs qui pour certains, de la famille des radars par exemple, peuvent introduire des saccades dans l'affichage de l'image. Les capteurs de type infrarouge présentent d'autres inconvénients comme déjà mentionnés.

Enfin, le système « APALS », acronyme signifiant « Autonomous Precision Approach and Landing System » propose une représentation synthétique de la piste d'atterrissage construite à partir de données de navigation et de la détection par un radar météo modifié. Ce système ne permet pas de savoir si la piste est effectivement détectée par le radar et ne propose pas de transition entre la représentation synthétique de la piste avant détection et après détection par le capteur.

US 2014/0285661 A1 divulgue un procédé de représentation synthétique d'éléments d'intérêt dans un système de visualisation.

Le procédé de représentation synthétique d'éléments d'intérêt selon l'invention ne présente pas les inconvénients précédents. Le coeur de ce procédé est d'afficher uniquement l'image synthétique mais dans une configuration et dans une représentation dépendant de la reconnaissance d'éléments d'intérêt par les capteurs. On bénéficie ainsi de l'information donnée par les capteurs sans avoir les inconvénients d'une image capteur qui peut être de mauvaise qualité.

Plus précisément, l'invention a pour objet un procédé de représentation synthétique d'éléments d'intérêt dans un système de visualisation pour aéronef, ledit système de visualisation comprenant au moins des capteurs de localisation dudit aéronef, une première base de données cartographique, une seconde base de données d'éléments d'intérêt, un capteur d'images, une unité de traitement des images issues dudit capteur d'images, une unité de génération d'images numériques tridimensionnelles représentatives du terrain survolé par l'aéronef en fonction des données issues des capteurs de localisation, des deux bases de données cartographique et d'éléments d'intérêt et de l'unité de traitement d'images et un dispositif de visualisation,
caractérisé en ce que, lorsque le terrain survolé comporte au moins un élément d'intérêt présent dans la base de données d'éléments d'intérêt, ledit élément étant affiché dans les images numériques tridimensionnelles représentatives du terrain survolé, le dit procédé de représentation synthétique comporte au moins :
- une première étape de recherche et de détection dudit élément d'intérêt dans chaque image d'une séquence d'images issues du capteur d'image, la détection étant assurée par l'unité de traitement et ;
- une seconde étape de génération d'images numériques tridimensionnelles représentatives du terrain survolé, l'élément d'intérêt étant représenté selon une première représentation s'il n'a pas été détecté dans aucune des images de la séquence d'images issues du capteur d'images et selon une seconde représentation s'il est détecté dans au moins une image de la séquence d'images.

Avantageusement, dans la seconde étape, l'élément d'intérêt étant représenté dans la seconde représentation est représenté selon une troisième représentation s'il n'est plus détecté dans une succession déterminée d'images de ladite séquence d'images.

Avantageusement, lorsque l'élément d'intérêt est détecté dans au moins une image de la séquence d'images, la position de cet élément d'intérêt dans l'image numérique tridimensionnelle est mise en concordance avec la position qu'il occupe dans ladite image issue du capteur d'images.

Avantageusement, lorsque l'élément d'intérêt est détecté dans au moins une image de la séquence d'images, la position de l'image numérique tridimensionnelle est mise en concordance avec la position de ladite image issue du capteur d'images.

Avantageusement, la première représentation, la seconde représentation et la troisième représentation diffèrent entre elles par les couleurs de leurs contours ou les styles de traits de leurs contours ou par l'apparition, la disparition ou la modification de symboles associés audit élément d'intérêt.

Avantageusement, l'élément d'intérêt est une piste d'atterrissage ou des éléments d'une piste d'atterrissage ou un hélipad ou encore un obstacle fixe.

Avantageusement, le capteur d'images est une caméra infrarouge, un radar millimétrique ou un « LADAR ».

Avantageusement, le système de visualisation est un des écrans couleur de la planche de bord de l'aéronef ou un afficheur de type tête haute affichant l'image tridimensionnelle sur le paysage extérieur ou un système de visualisation de casque ou un dispositif d'affichage et de projection sur le pare-brise de l'aéronef.

L'invention sera mieux comprise et d'autres avantages apparaîtront à la lecture de la description qui va suivre donnée à titre non limitatif et grâce aux figures annexées parmi lesquelles :
La figure 1 représente un système de visualisation mettant en oeuvre un procédé de représentation synthétique d'éléments d'intérêt selon l'invention ;
La figure 2 représente le diagramme fonctionnel représentant le procédé selon l'invention ;
Les figures 3, 4 et 5 représentent un exemple de mise en oeuvre du procédé selon l'invention dans un dispositif de visualisation.

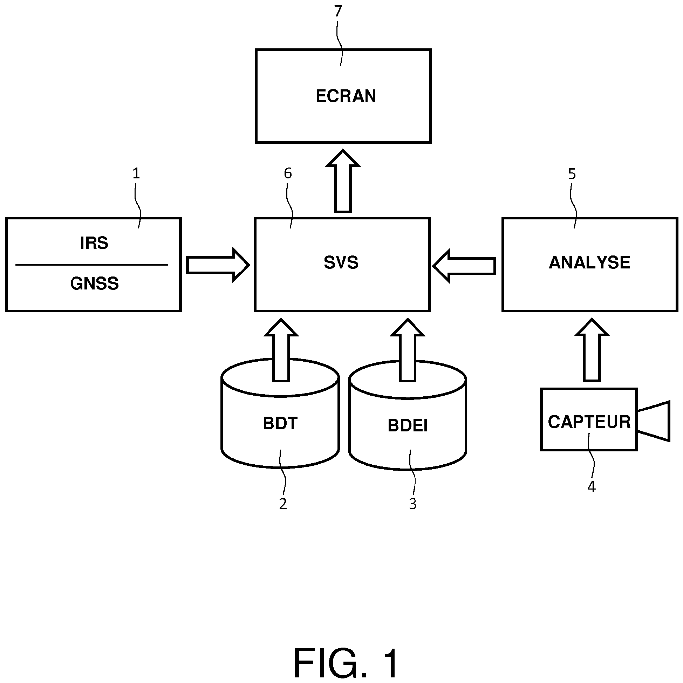

A titre d'exemple non limitatif, la figure 1 représente un système de visualisation mettant en oeuvre un procédé de représentation synthétique d'éléments d'intérêt selon l'invention dans le cadre d'une application aéronautique. Ce système de visualisation comprend au moins :
- des capteurs 1 de localisation dudit aéronef ;
- une première base de données cartographique 2 ;
- une seconde base de données d'éléments d'intérêt 3 ;
- un ou des capteurs d'images 4 ;
- une unité de traitement 5 des images issues dudit capteur d'images ;
- une unité de génération d'images numériques tridimensionnelles 6 représentatives du terrain survolé par l'aéronef en fonction des données issues des capteurs de localisation, des deux bases de données cartographique et d'éléments d'intérêt et de l'unité de traitement d'images et un dispositif de visualisation. Cette unité est également appelée unité SVS ;
- Un dispositif de visualisation 7.

Les capteurs 1 de localisation comportent généralement un système de navigation par satellite dit « GPS », acronyme signifiant « Global Positioning System » ou « GNSS », acronyme de « Global Navigation Satellite System » et une centrale inertielle dite « IRS », acronyme de « Inertial Reference System », l'ensemble permettant de déterminer la position de l'aéronef dans un repère terrestre et son attitude dans ce repère.

La base de données d'éléments d'intérêt 3 peut être la base de navigation du système de navigation de l'appareil, connu sous l'acronyme « FMS » signifiant « Flight Management System » ou encore la base d'obstacle du système « TAWS », signifiant « Terrain Awareness and Warning System ». Un élément d'intérêt de cette base peut être une piste d'atterrissage, un hélipad ou encore un obstacle fixe. La position d'un obstacle mobile ne peut pas venir d'une base de données. Par contre, elle peut être fournie par le système « ADS-B », acronyme signifiant « Automatic Dépendent Surveillance - Broadcast ».

Les capteurs d'images 4 peuvent être une caméra infrarouge, un radar millimétrique ou encore un laser actif de type « LADAR », acronyme signifiant « LAser Détection And Ranging ». Les capteurs sont nécessairement disposés pour regarder en avant de l'aéronef.

La fonction essentielle de l'unité de traitement 5 des images issues dudit capteur d'images 4 est de repérer les éléments d'intérêt présents dans l'image. Cette analyse est facilitée par la connaissance approximative des éléments d'intérêt qui devraient être présents dans l'image, compte-tenu de la position de l'aéronef par rapport au terrain. D'autre part, la forme des éléments d'intérêt est également connue.

L'unité 6 SVS génère les images numériques tridimensionnelles à partir des informations issues des capteurs de localisation, des deux bases de données cartographiques et d'éléments d'intérêt et de l'unité de traitement d'images. Elle met plus spécifiquement en oeuvre le procédé de représentation synthétique d'éléments d'intérêt selon l'invention.

Le dispositif de visualisation peut être de différentes natures. Il peut s'agir d'un des écrans couleur de la planche de bord de l'aéronef ou d'un afficheur de type tête haute affichant l'image tridimensionnelle sur le paysage extérieur ou encore d'un système de visualisation de casque ou d'un affichage sur le pare-brise de l'appareil.

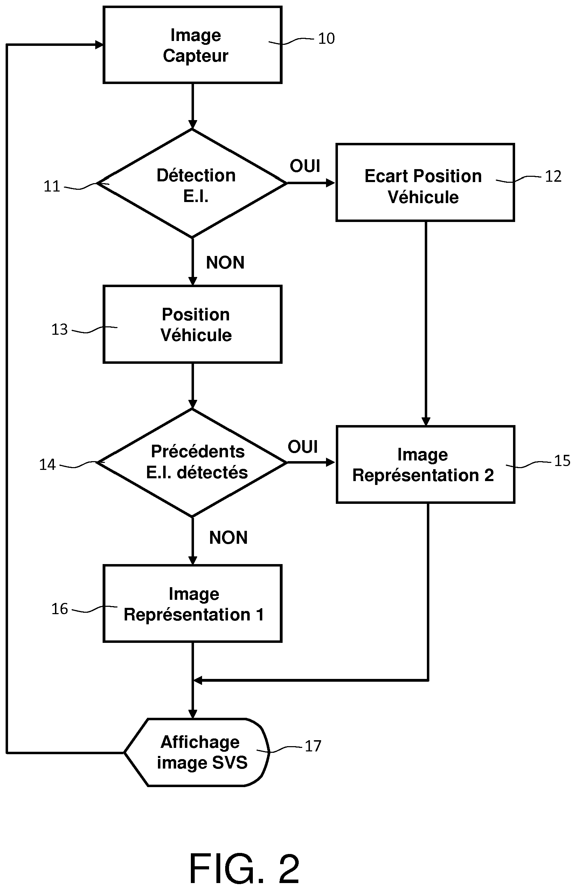

Le procédé selon l'invention est mis en oeuvre dans une séquence d'images qui peut comporter quelques images à quelques dizaines d'images. Cette séquence est, bien entendu, renouvelable. A titre d'exemple non limitatif, l'organigramme simplifié du procédé selon l'invention mis en oeuvre par l'unité 6 est représenté sur la figure 2.

Dans une étape initiale représentée sous la référence 10, le capteur d'images enregistre une image de la séquence et la transmet à l'unité de traitement 6.

Dans une première étape comprenant les références 11, 12,13 et 14, l'unité de traitement recherche dans cette image un élément d'intérêt E.I. contenu dans les bases de données et susceptible d'être présent dans l'image. Cette recherche est symbolisée par le losange 12.

Deux cas de figure se présentent. La recherche ne trouve aucun élément d'intérêt. Ce cas est symbolisé par la flèche « NON » issu du losange 11 de la figure 2. L'unité de calcul prend en compte la position de l'aéronef symbolisé par le rectangle 13. Puis, l'unité de calcul vérifie si dans les images précédentes, un élément d'intérêt a été détecté. Cette étape est symbolisée par le losange 14.

Si aucun élément d'intérêt n'a été détecté dans les images précédentes, ce cas étant symbolisé par la flèche « NON » issu du losange 14 de la figure 2, l'image synthétique tridimensionnelle est construite en fonction des informations de positionnement de l'aéronef données par les moyens de localisation tels que les systèmes GPS ou GNSS, éventuellement augmenté par satellite, ces systèmes sont connus sous l'appellation « SBAS » signifiant « Satellite-Based Augmentation Systems » ou la centrale inertielle IRS ou encore par un système hybride regroupant les informations issues de la centrale inertielle et des systèmes de navigation par satellite. Ces systèmes hybrides ont une marge d'erreurs sur chaque axe de 30 mètres avec une probabilité de 10⁻⁷.

Si un élément d'intérêt est tout de même présent dans l'image synthétique du paysage extérieur, il est alors généré sous la forme d'une première représentation comme indiqué dans le rectangle 16 de la figure 2. Le pilote comprend alors que cet élément d'intérêt doit exister sur le terrain mais n'a pas été détecté par les capteurs d'image.

Si la recherche trouve un élément d'intérêt ou si un élément d'intérêt a été précédemment détecté, ces cas sont symbolisés par les flèches « OUI » issues des losanges 11 et 14 de la figure 2. Un algorithme calcule alors la position de l'aéronef par rapport à cet élément d'intérêt dans les axes pertinents. Cette position calculée est ensuite utilisée pour cadrer l'image synthétique affichée. Ce cadrage ou ce calage prend en compte les éventuels écarts entre la position de l'aéronef issue de son système de navigation et la position calculée à partir de la position de l'élément détecté.

Deux options sont possibles. Dans une première option, le recalage ne concerne que l'élément d'intérêt. Le reste de l'image synthétique est affichée sans recalage. Dans une seconde option, la totalité de l'image synthétique est recalée. Dans tous les cas de figure, le ou les éléments d'intérêt sont affichés selon une seconde représentation différente de la première représentation, signifiant ainsi aux utilisateurs que le ou les éléments d'intérêt affichés ont été détectés par les capteurs de l'appareil et sont bien présents dans l'image.

On peut affiner le procédé selon l'invention. Lorsque l'élément d'intérêt a été détecté dans une ou plusieurs images puis ne l'est plus pendant une pluralité d'images successives, par exemple, si un banc de brouillard plus épais est momentanément traversé par l'aéronef gênant la réception des capteurs, alors l'élément d'intérêt est affiché sous la forme d'une troisième représentation, différente des deux précédentes.

La première représentation, la seconde représentation et la troisième représentation peuvent différer ente elles par les couleurs de leurs contours ou par les styles de traits de leurs contours ou encore par l'apparition, la disparition ou la modification de symboles associés audit élément d'intérêt.

A titre d'exemple d'application, le procédé selon l'invention est mis en oeuvre pour assurer le décollage et/ou l'atterrissage d'aéronefs en condition de visibilité dégradée. Les éléments d'intérêt sont alors les pistes d'atterrissage dont les informations nécessaires à leur affichage synthétique peuvent être fournies par la base de données de navigation au standard ARINC 424, base de données couramment présente dans les aéronefs modernes et régulièrement mise à jour.

Le module d'analyse contient alors, plus spécifiquement, des algorithmes de détection des pistes d'atterrissage et de leur rampe d'approche dans les images fournies par les capteurs d'image de l'appareil.

Lorsqu'une piste et/ou sa rampe est détectée, ce module calcule la position de l'aéronef dans le repère de la piste, c'est-à-dire la hauteur « HAT » par rapport à la piste, HAT signifiant « Height Above Threshold », l'écart latéral par rapport à l'axe de piste et optionnellement la distance horizontale au seuil. L'erreur de position dans l'axe longitudinal de la piste est bien moins critique que les deux écarts précédemment cités.

Ces deux ou optionnellement trois valeurs sont envoyées au module SVS de l'appareil qui les compare aux valeurs calculées à partir de la position supposée de l'avion fournie par la centrale inertielle et de la position de la ou des pistes d'atterrissage issues des bases de données d'éléments d'intérêt. Il est, en effet, possible qu'il existe plusieurs pistes parallèles dans un même aéroport. Si les deux ou trois valeurs absolues des différences sont inférieures à un seuil prédéterminé, une association est faite entre la piste détectée par le capteur et la piste issue de la base de données d'éléments d'intérêt. Ce seuil prédéterminé est fonction de l'erreur possible de la centrale inertielle, de l'erreur possible du capteur et de l'erreur possible de position du seuil de piste dans la base de données, le seuil pour l'axe vertical pouvant être différent du seuil utilisé pour les axes du plan de la piste. On peut également vérifier qu'il s'agit bien de la piste identifiée pour l'atterrissage dans le système de gestion du vol ou FMS de l'aéronef.

Un écart angulaire entre l'axe de la piste donnée par la base de données et l'axe de la piste détecté par un capteur peut être identifié si la précision de la valeur du cap de la piste enregistrée dans la base de navigation n'est pas suffisante, ou bien exprimée selon un cap magnétique, pouvant subir des variations dans le temps au lieu du cap vrai. Cet écart sur l'orientation de l'axe de piste, s'il existe, est également mémorisé et compensé dans le tracé de la piste synthétique.

Les écarts sur ces trois axes sont alors utilisés pour recaler et mémoriser une nouvelle origine du tracé de la piste dans l'image synthétique du terrain. Si un écart sur l'axe vertical est identifié, on peut également effectuer un recalage vertical du tracé du terrain. Si la détection de la piste par le capteur s'interrompt, le tracé de la piste continue d'être effectué avec la dernière origine calculée et la position fournie par la centrale IRS, permettant ainsi la poursuite de l'atterrissage avec une piste synthétique calculée à partir de sa dernière position recalée.

Une deuxième approche consiste à calculer et mémoriser un écart sur les données de longitude, de latitude et d'altitude provenant de la centrale IRS permettant un affichage de la piste cohérent des données issues du capteur en lieu et place du calcul de la nouvelle origine de la piste.

La piste est alors représentée sous sa seconde représentation, indiquant au pilote que la piste est bien là où elle est affichée.

Les deux représentations des pistes d'atterrissage peuvent être différentiées, par exemple, par la couleur de leur contour. Pour un affichage de planche de bord en « tête basse », le contour de la piste peut être représenté en ambre ou en rouge lorsque la piste n'est pas détectée et en vert lorsque la piste est détectée.

Ces représentations peuvent varier par le style de trait du contour. Pour un affichage monochrome en tête haute, les traits représentant la piste sont en pointillés lorsque la piste n'est pas détectée et ces traits sont représentés en traits pleins lorsque la piste est détectée.

On peut également utiliser des représentations symboliques des lampes du seuil de piste. Par exemple, les lampes sont représentées en forme de cercles vides ou avec des croix ambre lorsque la piste n'est pas détectée et les lampes de piste sont représentées en forme de cercles pleins blancs ou verts quand la piste est détectée.

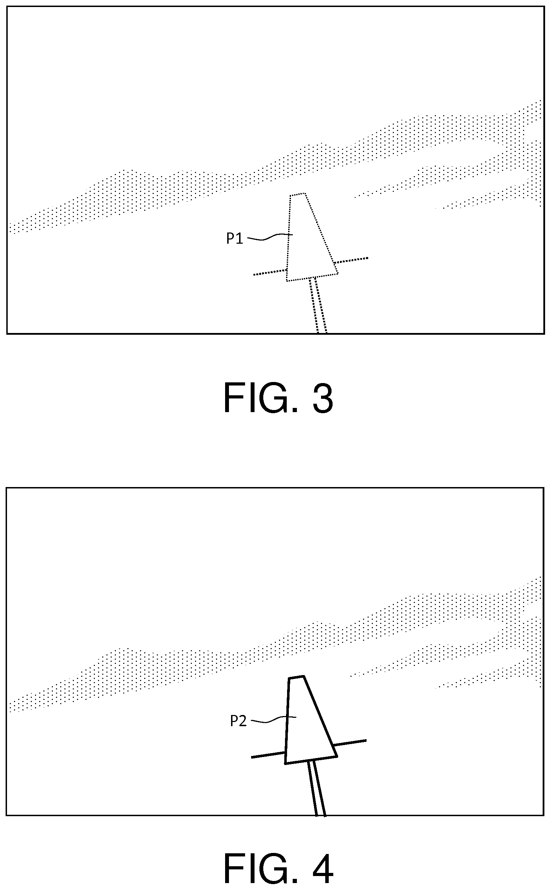

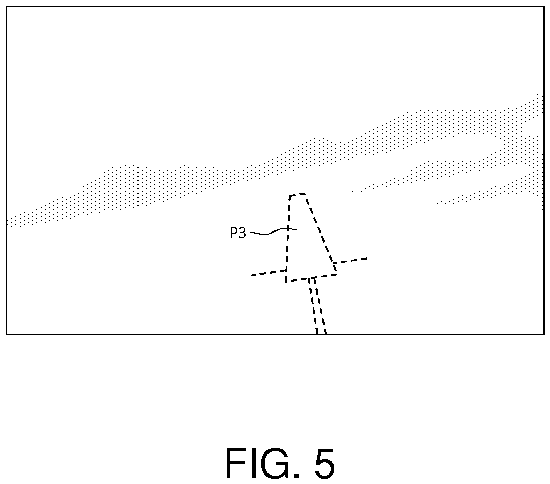

Les figures 3 à 5 illustrent, dans le cas où l'élément d'intérêt est une piste d'atterrissage P, les trois représentations possibles de cette piste dans un dispositif de visualisation Tête Haute. Dans le cas de la figure 3, la piste n'a pas été détectée et est représentée sous une première représentation P1 comportant des pointillés serrés. Dans le cas de la figure 4, la piste a été détectée et est représentée sous une seconde représentation P2 comportant des traits continus. Dans le cas de la figure 5, la piste a été détectée au moins une fois puis ne l'est plus pendant une succession d'images. Elle est représentée sous une troisième représentation P3 comportant des pointillés larges.

Le grand avantage du procédé selon l'invention est qu'il utilise les informations utiles issues des capteurs d'image de l'appareil sans avoir à les gérer ou à les afficher. Le pilote a ainsi l'information que les éléments d'intérêt sont bien présents à l'extérieur là où l'image synthétique tridimensionnelle les affiche sans avoir les inconvénients d'une image réelle qui ne serait pas nécessairement facilement exploitable.

## Revendications

1. Procédé de représentation synthétique d'éléments d'intérêt dans un système de visualisation pour aéronef, ledit système de visualisation comprenant au moins des capteurs de localisation (1) dudit aéronef, une première base de données cartographique (2), une seconde base de données d'éléments d'intérêt (3), un capteur d'images (4), une unité de traitement (5) des images issues dudit capteur d'images, une unité de génération (6) d'images numériques tridimensionnelles représentatives du terrain survolé par l'aéronef en fonction des données issues des capteurs de localisation, des deux bases de données cartographique et d'éléments d'intérêt et de l'unité de traitement d'images et un dispositif de visualisation (7), **caractérisé en ce que**,
lorsque le terrain survolé comporte au moins un élément d'intérêt présent dans la base de données d'éléments d'intérêt, ledit élément étant affiché dans les images numériques tridimensionnelles représentatives du terrain survolé, le dit procédé de représentation synthétique comporte au moins :
- une première étape (11, 12, 13, 14) de recherche et de détection dudit élément d'intérêt dans chaque image d'une séquence d'images issues du capteur d'image, la détection étant assurée par l'unité de traitement et ;
- une seconde étape (15, 16, 17) de génération d'images numériques tridimensionnelles représentatives du terrain survolé, l'élément d'intérêt étant représenté selon une première représentation s'il n'a pas été détecté dans aucune des images de la séquence d'images issues du capteur d'images et selon une seconde représentation s'il est détecté dans au moins une image de la séquence d'images.

2. Procédé de représentation synthétique d'éléments d'intérêt selon la revendication 1, **caractérisé en ce que**, dans la seconde étape, l'élément d'intérêt étant représenté dans la seconde représentation est représenté selon une troisième représentation s'il n'est plus détecté dans une succession déterminée d'images de ladite séquence d'images.

3. Procédé de représentation synthétique d'éléments d'intérêt selon l'une des revendications précédentes, **caractérisé en ce que**, lorsque l'élément d'intérêt est détecté dans au moins une image de la séquence d'images, la position de cet élément d'intérêt dans l'image numérique tridimensionnelle est mise en concordance avec la position qu'il occupe dans ladite image issue du capteur d'images.

4. Procédé de représentation synthétique d'éléments d'intérêt selon l'une des revendications précédentes, **caractérisé en ce que**, lorsque l'élément d'intérêt est détecté dans au moins une image de la séquence d'images, la position de l'image numérique tridimensionnelle est mise en concordance avec la position de ladite image issue du capteur d'images.

5. Procédé de représentation synthétique d'éléments d'intérêt selon l'une des revendications précédentes, **caractérisé en ce que** la première représentation, la seconde représentation et la troisième représentation d'un élément d'intérêt diffèrent entre elles par les couleurs de leurs contours ou par les styles de traits de leurs contours ou par l'apparition, la disparition ou la modification de symboles associés audit élément d'intérêt.

6. Procédé de représentation synthétique d'éléments d'intérêt selon l'une des revendications précédentes, **caractérisé en ce que** l'élément d'intérêt est une piste d'atterrissage ou des éléments d'une piste d'atterrissage ou un hélipad.

7. Procédé de représentation synthétique d'éléments d'intérêt selon l'une des revendications 1 à 5, **caractérisé en ce que** l'élément d'intérêt est un obstacle fixe.

8. Procédé de représentation synthétique d'éléments d'intérêt selon l'une des revendications précédentes, **caractérisé en ce que** le capteur d'images est un radar millimétrique ou un « LADAR » ou une caméra infrarouge.

9. Procédé de représentation synthétique d'éléments d'intérêt selon l'une des revendications précédentes, **caractérisé en ce que** le système de visualisation est un des écrans couleur de la planche de bord de l'aéronef ou un afficheur de type tête haute affichant l'image tridimensionnelle sur le paysage extérieur ou un système de visualisation de casque ou un dispositif d'affichage et de projection sur le pare-brise de l'aéronef.

## Patentansprüche

1. Verfahren zum synthetischen Darstellen von Elementen von Interesse in einem Anzeigesystem für Luftfahrzeuge, wobei das Anzeigesystem wenigstens Folgendes umfasst:
Lokalisierungssensoren (1) des Luftfahrzeugs, eine erste Kartendatenbank (2), eine zweite Datenbank mit Elementen von Interesse (3), einen Bildsensor (4), eine Einheit (5) zum Verarbeiten von Bildern von dem Bildsensor, eine Einheit (6) zum Erzeugen von dreidimensionalen digitalen Bildern, die das von dem Luftfahrzeug überflogene Gelände repräsentieren, in Abhängigkeit von den Daten von den Lokalisierungssensoren, von den zwei Datenbanken für Karten und Elemente von Interesse und der Einheit zum Verarbeiten von Bildern, und ein Anzeigegerät (7), **dadurch gekennzeichnet, dass**
das synthetische Darstellungsverfahren, wenn das überflogene Gelände wenigstens ein Element von Interesse umfasst, das sich in der Datenbank von Elementen von Interesse befindet, wobei das Element in den das überflogene Gelände repräsentierenden dreidimensionalen digitalen Bildern angezeigt wird, wenigstens Folgendes beinhaltet:
- einen ersten Schritt (11, 12, 13, 14) des Suchens und Erkennens des Elements von Interesse in jedem Bild einer Folge von Bildern von dem Bildsensor, wobei die Erkennung durch die Verarbeitungseinheit gewährleistet wird, und
- einen zweiten Schritt (15, 16, 17) des Erzeugens von das überflogene Gelände repräsentierenden dreidimensionalen digitalen Bildern, wobei das Element von Interesse gemäß einer ersten Darstellung dargestellt wird, wenn es nicht in einem der Bilder der Folge von Bildern von dem Bildsensor erkannt wird, und gemäß einer zweiten Darstellung, wenn es in wenigstens einem Bild der Folge von Bildern erkannt wird.

2. Verfahren zum synthetischen Darstellen von Elementen von Interesse nach Anspruch 1, **dadurch gekennzeichnet, dass** im zweiten Schritt das in der zweiten Darstellung dargestellte Element von Interesse gemäß einer dritten Darstellung dargestellt wird, wenn es in einer bestimmten Folge von Bildern der Bildfolge nicht mehr erkannt wird.

3. Verfahren zum synthetischen Darstellen von Elementen von Interesse nach einem der vorherigen Ansprüche, **dadurch gekennzeichnet, dass**, wenn das Element von Interesse in wenigstens einem Bild der Folge von Bildern erkannt wird, die Position dieses Elements von Interesse in dem dreidimensionalen digitalen Bild mit der Position in Übereinstimmung gebracht wird, die es in dem Bild von dem Bildsensor einnimmt.

4. Verfahren zum synthetischen Darstellen von Elementen von Interesse nach einem der vorherigen Ansprüche, **dadurch gekennzeichnet, dass**, wenn das Element von Interesse in wenigstens einem Bild der Folge von Bildern erkannt wird, die Position des dreidimensionalen digitalen Bildes mit der Position des Bildes von dem Bildsensor in Übereinstimmung gebracht wird.

5. Verfahren zum synthetischen Darstellen von Elementen von Interesse nach einem der vorherigen Ansprüche, **dadurch gekennzeichnet, dass** sich die erste Darstellung, die zweite Darstellung und die dritte Darstellung eines Elements von Interesse untereinander nach den Farben ihrer Konturen oder nach den Stilen von Linien ihrer Konturen oder nach dem Erscheinen, dem Verschwinden oder der Modifikation von mit dem Element von Interesse assoziierten Symbolen unterscheiden.

6. Verfahren zum synthetischen Darstellen von Elementen von Interesse nach einem der vorherigen Ansprüche, **dadurch gekennzeichnet, dass** das Element von Interesse eine Landebahn oder Elemente einer Landebahn oder ein Helipad ist.

7. Verfahren zum synthetischen Darstellen von Elementen von Interesse nach einem der Ansprüche 1 bis 5, **dadurch gekennzeichnet, dass** das Element von Interesse ein festes Hindernis ist.

8. Verfahren zum synthetischen Darstellen von Elementen von Interesse nach einem der vorherigen Ansprüche, **dadurch gekennzeichnet, dass** der Bildsensor ein Millimeterradar oder ein "LADAR" oder eine Infrarotkamera ist.

9. Verfahren zum synthetischen Darstellen von Elementen von Interesse nach einem der vorherigen Ansprüche, **dadurch gekennzeichnet, dass** das Anzeigesystem einer der Farbbildschirme des Armaturenbretts des Luftfahrzeugs oder ein Over-Head-Display, das das dreidimensionale Bild auf der Umgebungslandschaft anzeigt, oder ein Helmanzeigesystem oder ein Anzeige- und Projektionsgerät auf einer Frontscheibe des Luftfahrzeugs ist.

## Claims

1. A method for synthetic representation of elements of interest in a display system for an aircraft, said display system comprising at least location sensors (1) of said aircraft, a first cartographic database (2), a second elements of interest database (3), an image sensor (4), a unit (5) for processing images originating from said image sensor, a unit (6) for generating three-dimensional digital images representing the terrain that is flown over by the aircraft as a function of data originating from the location sensors, the two cartographic and elements of interest databases and the image processing unit and a display device (7), **characterised in that**,
when the terrain that is flown over comprises at least one element of interest that is present in the elements of interest database, said element being displayed in the three-dimensional digital images representing the terrain that is flown over, said synthetic representation method comprises at least:
- a first step (11, 12, 13, 14) of searching and detecting said element of interest in each image of a sequence of images originating from the image sensor, the detection being performed by the processing unit; and
- a second step (15, 16, 17) of generating three-dimensional digital images representing the terrain that is flown over, the element of interest being represented according to a first representation if it has not been detected in any of the images of the sequence of images originating from the image sensor and according to a second representation if it is detected in at least one image of the sequence of images.

2. The method for synthetic representation of elements of interest as claimed in claim 1, **characterised in that**, in the second step, the element of interest being represented in the second representation is represented according to a third representation if it is no longer detected in a determined succession of images of said sequence of images.

3. The method for synthetic representation of elements of interest as claimed in any one of the preceding claims, **characterised in that**, when the element of interest is detected in at least one image of the sequence of images, the position of this element of interest in the three-dimensional digital image is matched with the position that it occupies in said image originating from the image sensor.

4. The method for synthetic representation of elements of interest as claimed in any one of the preceding claims, **characterised in that**, when the element of interest is detected in at least one image of the sequence of images, the position of the three-dimensional digital image is matched with the position of said image originating from the image sensor.

5. The method for synthetic representation of elements of interest as claimed in any one of the preceding claims, **characterised in that** the first representation, the second representation and the third representation of an element of interest differ from each other in the colours of their contours or in the styles of the lines of their contours or by the appearance, the disappearance or the modification of symbols associated with said element of interest.

6. The method for synthetic representation of elements of interest as claimed in any one of the preceding claims, **characterised in that** the element of interest is a landing strip or elements of a landing strip or a helipad.

7. The method for synthetic representation of elements of interest as claimed in any one of claims 1 to 5, **characterised in that** the element of interest is a fixed obstacle.

8. The method for synthetic representation of elements of interest as claimed in any one of the preceding claims, **characterised in that** the image sensor is a millimetre wave radar or a "LADAR" or an infrared camera.

9. The method for synthetic representation of elements of interest as claimed in any one of the preceding claims, **characterised in that** the display system is one of the colour screens of the instrument panel of the aircraft or a head-up type display displaying the three-dimensional image on the external landscape or a helmet-mounted display system or a device for displaying and projecting on the windscreen of the aircraft.
